## Europäisches Patentamt

## European Patent Office

## Office européen des brevets

(11) Publication number: **0 168 188**
**B1**

(12) **EUROPEAN PATENT SPECIFICATION**

(45) Date of publication of patent specification: **25.07.90**

(21) Application number: **85304393.3**

(22) Date of filing: **19.06.85**

(51) Int. Cl.⁵: **B 32 B 25/08, B 32 B 27/26**

(54) **Curable rubber composition.**

(30) Priority: **06.07.84 GB 8417319**

(43) Date of publication of application:
**15.01.86 Bulletin 86/03**

(45) Publication of the grant of the patent:
**25.07.90 Bulletin 90/30**

(84) Designated Contracting States:
**AT BE CH DE FR GB IT LI NL SE**

(56) References cited:
**GB-A- 752 655**
**GB-A-2 023 147**
**US-A-2 982 396**
**US-E- 30 843**

(73) Proprietor: **EXXON RESEARCH AND ENGINEERING COMPANY**
**P.O.Box 390, 180 Park Avenue**
**Florham Park, New Jersey 07932 (US)**

(72) Inventor: **Stella, Giandomenico**
**Avenue Armand Scheitler 54**
**B-1150-Brussels (BE)**
Inventor: **Knaepen, Marc**
**Grumstraat 16**
**B-3400-Landen (BE)**

(74) Representative: **Dew, Melvyn John et al**
**Esso Chemical Ltd. Esso Chemical Research Centre P.O. Box 1**
**Abingdon Oxfordshire, OX13 6BB (GB)**

Courier Press, Leamington Spa, England.

## EP 0 168 188 B1

**Description**

This invention relates to rubber compositions in laminar form, and to a method of joining rubber sheets together using compositions derived from such laminates. Particularly, but not exclusively, the method is concerned with the splicing of rubber sheets in roofing applications.

It is known to splice rubber sheets by using adhesives applied between the overlapping regions of the sheets. Typically, cured EPDM sheeting is used in roofing applications, and it is necessary that any joints between adjacent sheets be long-lasting and watertight. One method of joining together overlapping sheets is to apply a layer of adhesive to the surface of one sheet, place an intermediate tape onto the adhesive layer, apply a further adhesive layer onto the intermediate tape and then to apply the second rubber sheet to this further adhesive layer. The joint develops a normal curing of the adhesives, and there may be some cross-linking at ambient temperature which yields a relatively strong bond between the cured EPDM sheet and the intermediate layer, which is usually of a plastic material. A second method commonly known for joining together cured EPDM sheets is to apply a tacky tape between the overlaping sheet regions. After pressing together the two sheets, there may be partial crosslinking of the tape at ambient temperature to improve the bonding.

Hitherto, the most widely used method of sheet splicing, particularly for roofing applications, makes use of a so-called hot bonding tape. Such a tape is constituted by a rubber composition including curable rubber and a curative therefor, which curative is substantially only active at elevated temperatures. In use, the tape is laid between the overlapping regions of the sheets, and curing of the tape is achieved by use of a portable, high-temperature (usually greater than 180°C) press, the pressure applied generally being from 2 to 3 atmospheres (200—300 kPa). A drawback of this technique is that it is somewhat inconvenient to use a curing press in situ, for example on a roof. Moreover, it is essential that the rubber sheets to be bonded together are dry before the splicing procedure takes place, and that the sheets have not been vulcanised by use of a steam curing technique. Operating at temperatures in excess of 180°C means that any absorbed water carried in the rubber sheeting gasifies and generates a vapour cushion between the tape and the sheet, which of course prevents or hinders adhesion. A further disadvantage of the hot bonding tape technique is that although the curative incorporated therein is high temperature active, some curing of the rubber component of the tape will inevitably take place at ambient temperatures, and so the storage life of such tapes is limited, usually to periods of 1 to 3 months.

There is a need, therefore, for a means of splicing together rubber sheets which gives a good bond, and also is relatively easy to use in situ, for example on rooftops.

According to one aspect of the present invention, there is provided a laminate which comprises

(a) a rubber layer comprising a curable rubber;

(b) a curative layer comprising a curing agent for the rubber and a polymer which is inert to the curing agent; and

(c) an intermediate layer comprising a material which is inert and impermeable to the curing agent, which intermediate layer is disposed between the rubber layer and the curative layer to prevent contact between the curable rubber and the curing agent.

A second aspect of the invention provides a method of splicing first and second rubber sheets, particularly in roofing applications, which comprises

(i) providing a laminate which comprises

(a) a rubber layer comprising a curable rubber;

(b) a curative layer comprising a curing agent for the rubber and a polymer which is inert to the curing agent; and

(c) an intermediate layer comprising a material which is inert and impermeable to the curing agent, which intermediate layer is disposed between the rubber layer and the curative layer to prevent contact between the curable rubber and the curing agent;

(ii) masticating the laminate to form a substantially homogenous composition comprising curable rubber and curing agent therefor;

(iii) applying the composition to the region of at least one of the sheets to be spliced which, in the spliced product, will form an area of sheet overlap; and

(iv) bringing together the overlap areas of the sheets and curing the composition in contact with said sheets to form a cured rubber joint therebetween.

The term curing the composition in contact with said sheets is intended to include simply allowing the composition to cure under the ambient conditions which obtain in the location where the splicing is effected, for example on a roof. Of course, curing can, if desired, be promoted by the application of heat, but it is a feature of the invention that low temperature curative systems may be employed, in contrast to the hot bonding technique described hereinbefore.

It is particularly preferred that the laminate be in the form of an elongate tape, and particular aspects and embodiments of the invention will be described with reference to laminates in tape form, although other laminar forms are equally applicable. Preferred features of the laminate as described herein are to be construed as applying equally to the use of the laminate in the method of the invention.

It is furthermore intended that the scope of this invention shall extend to the direct product of the method defined hereinbefore, that is to first and second rubber sheets which have been joined together by

2

the method. Such product also includes a plurality of such spliced sheets, which may constitute, for example, a finished roof or covering for some other element of substantial size.

As is described hereinafter the method using the laminate is particularly suited to sheet splicing in situ, that is in the immediate vicinity where the finished spliced product will serve its function. However, the method is equally applicable to the production of large areas of sheeting in, for example, a factory, from smaller rubber sheets which may have been produced, for example, on sheeting presses calenders or mills which have a maximum product dimension which is smaller than the dimensions required for the final product.

The curable rubber used in the rubber layer of the tape according to the invention may be, for example, EPM or EPDM rubber, butyl rubber or halogenated butyl rubber (chlorobutyl or bromobutyl). The curing agent is of course selected so as to be effective for curing such rubber when the tape is masticated into a homogeneous composition. The curing agent may be selected from the well known curatives, zinc oxide, peroxides, phenolic resins, thiourea compounds, mercapto compounds, dithiocarbamates and mixtures thereof being mentioned by way of example.

It is particularly preferred that the inert polymer with which the curing agent is admixed to form the curative layer, and the inert material which is employed to form the intermediate layer are the same substance. They will hence have the same viscosity, and mixing of the composition as a whole when performing the method of the invention will thereby be facilitated. The inert material of the intermediate layer acts as a barrier between the curable rubber and the curing agent, preventing any cure of the rubber taking place prior to the mastication stage when performing the method of the invention. The inert material may be, for example, a copolymer of ethylene and an unsaturated carboxylic acid ester, such as EVA, although it is particularly preferred to use polyisobutylene, which is saturated and, hence, unreactive with respect to the curing agent, but which, moreover, is a good tackifier. Hence, in performing the method of the invention, the polyisobutylene promotes the wetting of the rubber sheets to be joined by the composition employed as the jointing material. Of course, in addition to being unreactive, the inert material of the intermediate layer is impermeable to the curing agent, by which is meant that the material acts as a physical barrier and serves to prevent migration of the curing agent to the curable rubber, or vice versa. The components of the curative layer and the intermediate layer will of course be selected within the skill in the art to be compatible with the rubber of the sheets to be spliced in accordance with the method of the invention.

In one preferred embodiment, the rubber layer of the tape includes a substance which, when mixed with the curing agent of the curative layer, promotes the curing effect of that agent on the curable rubber. The substance, which may be termed a cure activator or accelerator, does not itself cure the rubber in the absence of the curing agent. It will be well appreciated in the art which particular combinations of curing agent and accelerator/activator will be effective for particular curable rubbers. By way of example, a curing agent which is zinc oxide may be activated by, for example, stearic acid for curing of chlorobutyl rubber.

It is a particular feature of the invention that the curing agent may be selected such that, when formed into a homogeneous mixture with the curable rubber, it gives curing of the rubber at ambient temperature. This has advantages when rubber sheets are to be joined together in roofing applications, since the application of heat to initiate curing is not necessary. Of course, the curing agent and any accelerators/activators may also be selected as desired to be heat activated, and in use of the method, heat may be supplied if desired, for example, by hot air or steam techniques. It will also be recognised that subsequent to sheet splicing, if the product comprises a roof, then this may well naturally be subjected to high temperatures.

As will be appreciated by those of ordinary skill in the art, the respective layers comprising the laminate of the invention may, in addition to the defined components, also include additives and process aids which are conventionally incorporated into rubbery compositions. For example, fillers, oils, tackifiers and scorch control agents may be includes in one or more of the layers.

Referring now specifically to the method of the invention, use of the tape (laminate) means that a homogeneous mixture of constant composition can be applied, after mastication of the tape, to the sheets to be spliced, without there being undesirable variation in the actual composition of the joining compound. This is particularly valuable since roofing sheets are usually spliced in situations where close control of the components of the jointing compound is not possible: roofing is usually assembled by those skilled in the building trades, not by skilled rubber technologists who would be aware of the importance of the jointing compound in ensuring a good, long lasting bond. It is convenient for mastication to be performed in an extruder, so that the homogeneous composition may be delivered directly to the regions of the sheets to be spliced which, when brought together, constitute the sheet overlap areas. Put simply, the jointing compound is applied to the surface of one or both sheets to be spliced and the sheets are brought together for curing of the composition to take place with the composition being in contact with and forming a seal between the two sheets. For roofing applications a small portable extruder has been found to be particularly useful. Preferably after application of the homogeneous composition to the sheets, the overlapping areas are consolidated through a hand-roll pressing device. Depending on the nature of the rubber/curative system, the joint may simply be left to cure naturally at ambient temperature, or heat may be applied to promote curing.

It is usual that roofing sheets are cured EPDM, and the method of the invention is particularly suitable

3

for joining such sheets, since the jointing compound becomes fully cured internally and, whilst not wishing to be bound to theoretical considerations, it is believed that simultaneously some covulcanisation takes place with regard to the sites of residual unsaturation contained in the cured EPDM. A particularly strong joint is therefore possible with crosslinking taking place from the first sheet, through the jointing compound, and into the second sheet. The result is a strong and coherent bonding of the two EPDM sheets. The rubber material of the sheets to be spliced may if desired correspond with the curable rubber contained in the tape used to produce the homogeneous jointing composition, although it is generally preferred to employ chlorobutyl rubber as the curable rubber component when joining together EPDM sheets, since it is tacky and cures well at room temperature (depending on the curative selected).

The laminates of the invention may be produced by known techniques. For example, each layer may be independently prepared by extrusion, and thereafter the layers put together. Alternatively, the layers may be produced by calendering. Conveniently for a tape form laminate, each layer is, for example, from 2 to 3 cm wide and for example from 1 to 3 mm thick.

The following Examples illustrate the invention.

Examples

Six laminar tapes (A—F) according to the invention were prepared by forming the respective layer composition in an extruder and extruding layers each 2.5 cm wide and 0.3 cm thick. The appropriate rubber, curative and intermediate layers, designated (a), (b) and (c) respectively, were then combined to form the tapes as specified in Table 1, in which the proportions indicated are in parts by weight.

The six tapes were used to splice together EPDM sheets produced from a sheeting compound as shown in Table 2. The sheets were 2 mm thick, 25 cm wide, produced by calendering and cured for 60 minutes in an autoclave at 540 kPa (5.5 kg/cm²) (161°C) using steam or hot air.

The components/abbreviations of Tables 1 and 2 are as follows:

Vistanex L100 — polyisobutylene having viscosity average molecular weight of 1.06 to $1.44 \times 10^6$
DETU — diethylthiourea (accelerator)
DPTU — diphenylthiourea (accelerator)
Koresin — aromatic hydrocarbon tackifier resin
MT black — low reinforcing carbon black filler
FEF black — reinforcing carbon black filler
Chlorobutyl 1066 — chlorobutyl rubber of Mooney ML(1+8) at 100°C = 49—58
Suprex clay — filler
MVT — talc filler
MBTS — mercapto benzo thiazyl disulphide
MD 82—3 — high unsaturation, fast curing EPDM of Mooney ML(1+8) at 127°C = 60
Esso Butyl 365 — fast curing butyl rubber of Mooney ML(1+8) at 100°C = 41—49
SRF black — semi reinforcing carbon black
GMF — dibenzoquinone dioxime
MBT — mercaptobenzothiazole (accelerator)
ZDBDC — zinc dibutyldithiocarbamate
VULCACIT P EXTRAN — dithiocarbamate accelerator
VULCACIT ZP — organic dithiocarbamate
TEA — triethanolamine
MD 83—1 — low Mooney, highly reactive fast curing EPDM of Mooney ML(1+8) at 127°C = 35
MD 725 — normal curing EPDM of Mooney ML(1+8) at 127°C = 50
FEF N550 — fast extruding furnace carbon black
Martinal OL III — aluminium hydrate filler
Staybelite ester 10 — tackifier
Sunpar 2280 — paraffinic oil
Agerite resin D — antioxidant
ZMTI — zinc mercapto toluene imidazole (antioxidant)
NDBDC — nickel dibutyl dithiocarbamate (accelerator/antioxidant)
DTDM — dithiodimorpholine disulphide (accelerator)
TMTDS — tetra methyl thiuram disulphide (accelerator)
Of the above-specified components, the following are believed to be trade marks:
Vistanex L 100 — Exxon Chemical Company
Koresin — BASF AG
Chlorobutyl 1066 — Exxon Chemical Company
Suprex — Huber Company
MST (Mistron Vapour Talc) — Cyprus Company
Esso Butyl 365 — Exxon Chemical Company
GMF — Uniroyal Inc.
VULCACIT P EXTRAN — Bayer AG
VULCACIT ZP — Bayer AG
Martinal OL III — Martinswerk

Staybelite ester 10 — Hercules Inc.

Sunpar 2280 — Sun Oil Company

Agerite resin D — R T Vanderbilt Company Inc.

The MINEX-mini-extruder mentioned hereinafter is believed to be a trade mark of SIO Export Trading Maskinfabriken "SIO" A/S.

Splices were prepared using each tape by masticating the tape in a laboratory extruder of diameter 25 mm, length/diameter ratio 5:1 at conditions of feed: room temperature; body: 80°C; die 100°C; speed 60 rpm. The homogeneous composition resulting was extruded as a 2.5 cm wide, 0.3 cm thick layer which was applied directly to the overlap region of the cured EPDM sheets to be spliced.

The sheets were then brought together to form a splice of width 2.5 cm and thickness 0.3 cm.

Shear (at room temperature) and peel (at room temperature and 70°C) characteristics of the splices were measured (in kg on splices of 2.5 cm width, 5 cm length) using an Instrom tensile tester at a separate rate of 5 cm/min.

Results are shown in Table 3, from which it will be seen that four different conditions were used for the production of the splices and measurement of their characteristics, as follows:

Condition 1: no prior ageing of the tape; spliced assembly aged for 1 month at room temperature prior to testing; EPDM sheet hot air cured.

Condition 2: no prior ageing of the tape; spliced assembly aged for 3 days at 80°C prior to testing; EPDM sheet hot air cured.

Condition 3: as Condition 2; but EPDM sheet was steam cured.

Condition 4: as Condition 2, but tape was prior aged for 2 weeks at 70°C.

From Table 3, various conclusions may be drawn. Thus, a comparison of the results obtained at Condition 2 with those of Condition 4 show that the tapes were stable on storage, there being no substantive difference in the characteristics of the splices derived from aged and unaged tapes. Conditon 3 measurements show that the method of the invention gives bonding even when the EPDM sheeting has been steam cured. The bond strength is lower than with hot air cured sheets, but this is to be compared with the use of the known hot bonding technique with steam cured EPDM sheets, which give no measurable adhesion between the sheets. Also for reference, it is noted that the known hot bonding technique used for splicing hot air cured EPDM sheets typically gives peel (room temperature/70°C) values of 4.5/1.5 (kg) and shear (room temperature) values of 13.5 (kg). Typical values obtained with the use of conventional splicing adhesives (both air cured and steam cured sheets) are peel (RT/70°C): 2.0/0.3; shear (RT): 12.

A comparison of Condition 1 results with those of Condition 2 leads to the conclusion that the spliced assembly will continue curing after formation of the splice. Thus in roofing applications the strength of the bond will increase with time.

A further series of tests was performed on tapes produced from compositions A, C and E by calendering each layer to 1.5 mm thickness, giving tapes of total thickness 4.5 mm and width 2 cm. This time the tapes were masticated and applied to the EPDM sheet overlap regions using a portable extruder (MINEX-mini-extruder) operating at room temperature feed and 110°C body temperature. The homogeneous composition was applied to cured EPDM sheets to form a splice width of 2.5 cm, thickness of 0.3 cm, and the strength of the splice was measured as before, again under four different conditions as follows:

Condition 5: air cured EPDM; splice assembly aged for 3 days at room temperature.

Condition 6: air cured EPDM; splice assembly aged for 3 days at 80°C.

Condition 7: as Condition 5, but steam cured EPDM.

Condition 8: as Condition 6 but steam cured EPDM.

Results are shown in Table 4, from which it may be seen that the ability of splices to continue curing in situ is confirmed, and splice strength values at least as good as those typical of the known hot bonding technique are obtained.

TABLE 1

Tape A

| layer | (a) | (c) | (b) |
|---|---|---|---|
| Esso Chlorobutyl 1066 | 100 | – | – |
| Vistanex L 100 | – | 100 | 100 |
| MT Black | 30 | 30 | 30 |
| FEF Black | 30 | 30 | 30 |
| Paraffinic oil | 15 | 30 | 30 |
| Koresin | 15 | 15 | 15 |
| ZnO | – | – | 11 |
| DETU | – | – | 1.7 |
| DPTU | – | – | 3.3 |
| MgO | 0.5 | – | – |
| Stearic acid | 4 | – | – |

Tape B

| layer | (a) | (c) | (b) |
|---|---|---|---|
| Esso Chlorobutyl 1066 | 100 | – | – |
| Vistanex L 100 | – | 100 | 100 |
| MT Black | – | 30 | 30 |
| FEF Black | 10 | 30 | 30 |
| Paraffinic oil | 10 | 30 | 30 |
| Koresin | 15 | 15 | 15 |
| ZnO | – | – | 11 |
| SnCl$_2$ | – | – | 1.7 |
| ZnCl$_2$ | – | – | 1.7 |
| Suprex clay | 45 | – | – |
| Mistron vapour talc | 45 | – | – |
| Stearic acid | 4 | – | – |

## TABLE 1

### Tape C

| | layer | (a) | (c) | (b) |
|---|---|---|---|---|
| MD 82-3 | | 50 | - | - |
| ESSO Butyl 365 | | 50 | - | - |
| Vistanex L 100 | | - | 100 | 100 |
| MT Black | | - | 30 | 30 |
| FEF Black | | - | 30 | 30 |
| Paraffinic oil | | 30 | 30 | 30 |
| Koresin | | 15 | 15 | 15 |
| Red lead | | - | - | 7.6 |
| MBTS | | - | - | 1.9 |
| SRF Black | | 70 | - | - |
| Stearic acid | | 4 | - | - |
| ZnO | | 5 | - | - |
| GMF | | 4.5 | - | - |

## TABLE 1

### Tape D

| layer | (a) | (c) | (b) |
|---|---|---|---|
| MD 82-3 | 50 | – | – |
| ESSO Butyl 365 | 50 | – | – |
| Vistanex L 100 | – | 100 | 100 |
| MT Black | – | 30 | 30 |
| FEF Black | – | 30 | 30 |
| Paraffinic oil | 30 | 30 | 30 |
| Koresin | 15 | 15 | 15 |
| S | – | – | 1.4 |
| MBT | – | – | 0.5 |
| ZDBDC | – | – | 2.9 |
| VULKACIT P EXTRA N | – | – | 0.7 |
| VULKACIT ZP | – | – | 1.0 |
| TEA | – | – | 0.5 |
| SRF Black | 70 | – | – |
| Stearic acid | 4 | – | – |
| ZnO | 5 | – | – |

### TABLE 1

### Tape E

| layer | (a) | (c) | (b) |
|---|---|---|---|
| MD 82-3 | 50 | – | – |
| MD 83-1 | 50 | – | – |
| Vistanex L 100 | – | 100 | 100 |
| MT Black | – | 30 | 30 |
| FEF Black | 45 | 30 | 30 |
| Paraffinic oil | 50 | 30 | 30 |
| Koresin | 15 | 15 | 15 |
| S | – | – | 1.2 |
| MBT | – | – | 0.4 |
| ZDBDC | – | – | 2.4 |
| VULKACIT P EXTRA N | – | – | 0.6 |
| VULKACIT ZP | – | – | 0.8 |
| TEA | – | – | 0.4 |
| SRF Black | 45 | – | – |
| Stearic acid | 4 | – | – |
| ZnO | 5 | – | – |

### TABLE 1

#### Tape F

| | layer | (a) | (c) | (b) |
|---|---|---|---|---|
| ESSO Butyl 365 | | 100 | – | – |
| Vistanex L 100 | | – | 100 | 100 |
| MT Black | | – | 30 | 30 |
| FEF Black | | – | 30 | 30 |
| Paraffinic oil | | 30 | 30 | 30 |
| Koresin | | 15 | 15 | 15 |
| Red lead | | – | – | 8 |
| MBTS | | – | – | 2 |
| SRF Black | | 60 | – | – |
| Stearic acid | | 1 | – | – |
| ZnO | | 5 | – | – |
| GMF | | 4.5 | – | – |

### TABLE 2

#### EPDM SHEETING COMPOUND

| | |
|---|---|
| MD 725 | 100 |
| FEF N550 | 70 |
| MARTINAL OL III | 50 |
| SUNPAR 2280 | 40 |
| ZINC OXIDE | 10 |
| STEARIC ACID | 2 |
| STAYBELITE ESTER 10 | 5 |
| AGERITE RESIN D | 0.4 |
| ZMTI | 1.6 |
| NDBDC | 2 |
| DTDM | 2.5 |
| TMTDS | 2.5 |

## TABLE 3

### SPLICING PERFORMANCE

| Conditions | 1 | | 2 | | 3 | | 4 | |
|---|---|---|---|---|---|---|---|---|
| Test Temperature | Shear RT | Peel RT / 70°C | Shear RT | Peel RT / 70°C | Shear RT | Peel RT / 70°C | Shear RT | Peel RT / 70°C |
| Tape | | | | | | | | |
| A | 0.75 | 0.5 / * | 17.0 | 12.0/1.4 | 6.7 | 3.0/0.3 | 18.0 | 11.5/1.3 |
| B | 1.1 | 0.65 / * | 18.0 | 10.5/1.2 | 5.6 | 2.0/0.15 | 17.5 | 12.0/1.1 |
| C | 1.2 | 0.65 / * | 18.0 | 12.0/1.0 | 6.5 | 2.0/0.1 | 18.2 | 12.0/0.9 |
| D | 3.0 | 0.3 / * | 17.6 | 5.4/7.5 | 8.5 | 3.2/0.26 | 16.8 | 6.0/0.7 |
| E | 1.75 | 0.55 / * | 16.9 | 7.0/0.4 | 6.5 | 2.1/0.27 | 16.5 | 7.2/0.3 |
| F | 2.3 | 0.65 / * | 16.9 | 7.1/0.4 | 8.2 | 2.3/0.4 | 16.5 | 6.9/0.3 |

* = too low to measure

EP 0 168 188 B1

EP 0 168 188 B1

## TABLE 4

| Condition | 5 | | 6 | | 7 | | 8 | |
|---|---|---|---|---|---|---|---|---|
| | Shear RT/70°C | Peel RT/70°C | Shear RT/70°C | Peel RT/70°C | Shear RT/70°C | Peel RT/70°C | Shear RT/70°C | Peel RT/70°C |
| Test Temperature | | | | | | | | |
| Tape | | | | | | | | |
| A | 4.8/1.4 | 3.0/0.05 | 22.0/5.2 | 8.5/1.0 | 5.0/1.5 | 3.0/0.07 | 6.0/2.5 | 2.0/0.8 |
| C | 6.8/1.4 | 1.0/0.05 | 17.5/3.0 | 9.5/0.7 | 5.5/1.8 | 2.1/0.08 | 11.0/2.8 | 4.0/1.0 |
| E | 4.8/1.4 | 3.5/0.15 | 13.0/4.3 | 9.2/1.3 | 4.0/1.7 | 3.2/0.2 | 12.0/2.7 | 6.0/1.4 |

# EP 0 168 188 B1

**Claims**

1. A laminate which comprises
(a) a rubber layer comprising a curable rubber;
(b) a curative layer comprising a curing agent for the rubber and a polymer which is inert to the curing agent; and
(c) an intermediate layer comprising a material which is inert and impermeable to the curing agent, which intermediate layer is disposed between the rubber layer and the curative layer to prevent contact between the curable rubber and the curing agent.

2. A laminate according to claim 1, wherein the inert polymer of the curative layer and the inert material of the intermediate layer are the same substance.

3. A laminate according to claim 1 or 2, wherein the inert polymer and/or the inert material comprises polyisobutylene or ethylenevinylacetate copolymer.

4. A laminate according to any one of the preceding claims, wherein the rubber layer comprises a cure activator or accelerator which does not itself cure the rubber but which in admixture with the curing agent contained in the curative layer promotes curing of said rubber.

5. A laminate according to any one of the preceding claims, wherein the curing agent, optionally in combination with an activator or accelerator, is effective for curing the rubber at ambient temperature.

6. A laminate according to any one of claims 1 to 4, wherein the curing agent is effective for curing the rubber at elevated temperature using steam or hot air as heating medium.

7. A laminate according to any one of the preceding claims, wherein the curing agent is selected from zinc oxide, peroxides, phenolic resins, thiourea compounds, mercapto compounds, dithiocarbamates, and mixtures thereof.

8. A laminate according to any one of the preceding claims, wherein the curable rubber comprises EPM, EPDM, butyl or halogenated butyl rubber.

9. A laminate according to any one of the preceding claims, wherein the rubber layer and/or curative layer and/or intermediate layer includes conventional rubber composition additives and/or process aids selected from fillers, oils and tackifiers.

10. A laminate according to any one of the preceding claims when in the form of an elongate tape.

11. A method of splicing first and second rubber sheets, particularly in roofing applications, which comprises
(i) providing a laminate according to any one of the preceding claims;
(ii) masticating the laminate to form a substantially homogeneous composition comprising curable rubber and curing agent therefor;
(iii) applying the composition to the region of at least one of the sheets to be spliced which, in the spliced product, will form an area of sheet overlap; and
(iv) bringing together the overlap areas of the sheets and curing the composition in contact with said sheets to form a cured rubber joint therebetween.

12. A method according to claim 11, wherein the rubber of the sheets is the same as the curable rubber of the laminate.

13. A method according to claim 11 or 12, wherein the rubber of the sheet comprises EPM, EPDM, butyl or halogenated butyl rubber.

14. A method according to claim 11 wherein the rubber of the sheet is EPDM and the curable rubber of the laminate is chlorinated butyl rubber.

15. A method according to claim 13 or 14, wherein the rubber of the sheet is in cured form.

16. A method according to any one of claims 11 to 15, wherein mastication of the laminate and application of the resulting composition is carried out by means of an extruder.

17. A method according to any one of claims 11 to 16, wherein curing of the composition is carried out at ambient temperature.

18. A method according to any one of claims 11 to 16, wherein curing of the composition is carried out at elevated temperature.

**Patentansprüche**

1. Laminat, umfassend
(a) eine ein härtbares Gummi umfassende Gummilage;
(b) eine Härterlage, die einen Härter für das Gummi und ein Polymer umfaßt, das inert gegenüber dem Härter ist; und
(c) ein Zwischenlage, die ein Material umfaßt, das inert und undurchlässig für den Härter ist, wobei die Zwischenlage zwischen der Gummilage und der Härterlage angeordnet ist, um einen Kontakt zwischen dem härtbaren Gummi und dem Härter zu verhindern.

2. Laminat nach Anspruch 1, in dem das inerte Polymer der Härterlage und das inerte Material der Zwischenlage dieselben Substanzen sind.

3. Laminat nach Anspruch 1 oder 2, in dem das inerte Polymer und/oder inerte Material Polyisobutylen

13

oder Ethylenvinylacetat-Copolymer umfaßt.

4. Laminat nach einem der vorhergehenden Ansprüche, in dem die Gummilage einen Härtungsaktivator oder Härtungsbeschleuniger umfaßt, der das Gummi nicht selbst härtet aber welcher im Gemisch mit dem in der Härterlage enthaltenden Härter das Aushärten des Gummis beschleunigt.

5. Laminat nach einem der vorhergehenden Ansprüche, in dem der Härter, gegebenenfalls in Kombination mit einem Aktivator oder Beschleuniger, wirksam für das Aushärten des Gummis bei Umgebungstemperatur ist.

6. Laminat nach Ansprüche 1 bis 4, in dem der Härter für das Aushärten des Gummis bei gehobenen Temperaturen unter Verwendung von Dampf oder Heißluft als Heizmedium wirksam ist.

7. Laminat nach einem der vorhergehenden Ansprüche, in dem der Härter aus Zinkoxid, Peroxiden, Phenolharzen, Thioharnstoffverbindungen, Mercaptoverbindungen, Dithiocarbamaten, und Mischungen derselben ausgewählt ist.

8. Laminat nach einem der vorhergehenden Ansprüche, in dem das härtbare Gummi EPM, EPDM, Butyl- oder halogenierten Butylkautschuk umfaßt.

9. Laminat nach einem der vorhergehenden Ansprüche, in dem die Gummilage und/oder Härterlage und/oder Zwischenlage übliche Gummizusammensetzungsadditive und/oder Verfahrenshilfsmittel, ausgewählt aus Füllstoffen, Ölen und Mitteln zu Klebrigmachen, enthält.

10. Laminat nach einem der vorhergehenden Ansprüche wenn es in Form eines langen Bandes vorliegt.

11. Verfahren zum Zusammenkleben von ersten und zweiten Gummifolien, insbesondere bei Dachdeckerarbeiten, bei dem man

(i) ein Laminat gemäß einem der vorhergehenden Ansprüche bereitstellt;

(ii) das Laminat mastiziert, um eine im wesentlichen homogene Zusammensetzung zu bilden, die ein härtbares Gummi und einen Härter dafür umfaßt;

(iii) die Zusammensetzung auf den Bereich von mindestens einer der zusammenzuklebenden Folien aufträgt der in dem zusammengeklebten Produkt einen überlappenden Bereich der Folien bildet; und

(iv) die überlappenden Bereiche der Folien zusammenbringt und die Zusammensetzung in Kontakt mit den Folien aushärtet, um zwischen ihnen eine ausgehärtete Gummiverbindung zu bilden.

12. Verfahren nach Anspruch 11, in dem das Gummi der Folien dasselbe ist wie das härtbare Gummi des Laminats.

13. Verfahren nach Anspruch 11 oder 12, in dem das Gummi der Folie EPM, EPDM, Butyl- oder halogenierten Butylkautschuk umfaßt.

14. Verfahren nach Anspruch 11, in dem das Gummi der Folie EPDM ist und das härtbare Gummi des Laminats chlorierter Butylkautschuk ist.

15. Verfahren nach Anspruch 13 oder 14, in dem das Gummi der Folie gehärtet ist.

16. Verfahren nach Ansprüche 11 bis 15, indem die Mastikation des Laminats und das Auftragen der resultierenden Zusammensetzung mit Hilfe eines Extruders durchgeführt wird.

17. Verfahren nach Ansprüche 11 bis 16, indem das Aushärten der Zusammensetzung bei Umgebungstemperatur durchgeführt wird.

18. Verfahren nach Ansprüche 11 bis 16, indem das Aushärten der Zusammensetzung bei erhöhter Temperatur durchgeführt wird.

**Revendications**

1. Stratifié, qui comprend

(a) une couche de caoutchouc renfermant un caoutchouc vulcanisable;

(b) une couche de vulcanisation renfermant un agent de vulcanisation du caoutchouc et un polymère qui est inerte vis-à-vis de l'agent de vulcanisation; et

(c) une couche intermédiaire renfermant une matière qui est inerte et imperméable vis-à-vis de l'agent de vulcanisation, couche intermédiaire qui est placée entre la couche de caoutchouc et la couche de vulcanisation pour empêcher le contact entre le caoutchouc vulcanisable et l'agent de vulcanisation.

2. Stratifié suivant la revendication 1, dans lequel le polymère inerte de la couche de vulcanisation et la matière inerte de la couche intermédiaire sont indentiques.

3. Stratifié suivant la revendication 1 ou 2, dans lequel le polymère inerte et/ou la matière inerte consistent en polyisobutylène ou en un copolymère éthylèneacétate de vinyle.

4. Stratifié suivant l'une quelconque des revendications précédentes, dans lequel la couche de caoutchouc renferme un activateur ou accélérateur de vulcanisation qui ne provoque pas lui-même la vulcanisation du caoutchouc, mais qui, en mélange avec l'agent de vulcanisation présent dans la couche de vulcanisation active la vulcanisation de ce caoutchouc.

5. Stratifié suivant l'une quelconque des revendications précédentes, dans lequel l'agent de vulcanisation, facultativement en association avec un activateur ou accélérateur, est efficace pour la vulcanisation du caoutchouc à température ambiante.

6. Stratifié suivant l'une quelconque des revendications 1 à 4, dans lequel l'agent de vulcanisation est efficace pour la vulcanisation du caoutchouc à température élevée au moyen de vapeur d'eau ou d'air chaud comme milieu de chauffage.

7. Stratifié suivant l'une quelconque des revendications précédentes, dans lequel l'agent de vulcanisation est choisi entre l'oxyde de zinc, des peroxydes, des résines phénoliques, des thiourées, des mercaptans, des dithiocarbamates et leurs mélanges.

8. Stratifié suivant l'une quelconque des revendications précédentes, dans lequel le caoutchouc vulcanisable consiste en caoutchouc EPM, en caoutchouc EPDM, en caoutchouc butyl ou en caoutchouc butyl halogéné.

9. Stratifié suivant l'une quelconque des revendications précédentes, dans lequel la couche de caoutchouc et/ou la couche de vulcanisation et/ou la couche intermédiaire renferment des additifs et/ou adjuvants de traitement classiques des compositions de caoutchoucs, choisis entre des charges, des huiles et des agents d'adhésivité.

10. Stratifié suivant l'une quelconque des revendications précédentes, sous forme d'une bande allongée.

11. Procédé pour coller des première et seconde feuilles de caoutchouc, en particulier dans des applications de pose de toitures, qui consiste:

(i) à produire un stratifié suivant l'une quelconque des revendications précédentes;

(ii) à malaxer le stratifié pour former une composition pratiquement homogène comprenant un caoutchouc vulcanisable et un agent de vulcanisation de ce caoutchouc;

(iii) à appliquer la composition à la zone d'au moins l'une des feuilles à coller qui, dans le produit collé, forme une zone de chevauchement des feuilles; et

(iv) à mettre en contact les zones de chevauchement des feuilles et à provoquer la vulcanisation de la composition en contact avec lesdites feuilles pour former entre ces feuilles une jonction de caoutchouc vulcanisé.

12. Procédé suivant la revendication 11, dans lequel le caoutchouc des feuilles est identique a caoutchouc vulcanisable du stratifié.

13. Procédé suivant la revendication 11 où 12 dans lequel le caoutchouc de la feuille consiste en un caoutchouc EPM, un caoutchouc EPDM, un caoutchouc butyle ou un caoutchouc butyl halogéné.

14. Procédé suivant la revendication 11, dans lequel le caoutchouc de la feuille est un caoutchouc EPDM et le caoutchouc vulcanisable du stratifié est un caoutchouc butyle chloré.

15. Procédé suivant la revendication 13 où 14, dans lequel le caoutchouc de la feuille est à l'état vulcanisé.

16. Procédé suivant l'une quelconque des revendications 11 à 15, dans lequel le malaxage du stratifié et l'application de la composition résultante sont effectués au moyen d'une extrudeuse.

17. Procédé suivant l'une quelconque des revendications 11 à 16, dans lequel la vulcanisation de la composition est effectuée à température ambiante.

18. Procédé suivant l'une quelconque des revendications 11 à 16, dans lequel la vulcanisation de la composition est effectuée à une température élevée.